# EUROPÄISCHE PATENTANMELDUNG

(11) **EP 3 698 932 A1**
(43) Veröffentlichungstag der Anmeldung: **26.08.2020**
(21) Anmeldenummer: 19158178.4
(22) Anmeldetag: 20.02.2019
(51) Int. Cl.: B28D 7/02, B23Q 11/00

(54) **HOHLBOHRERVORRICHTUNG MIT SAUGKOPF, DER ÖFFNUNGEN UND EINE REGELVORRICHTUNG UMFASST, SOWIE ADAPTERVORRICHTUNG**

(71) Anmelder: Hilti Aktiengesellschaft, 9494 Schaan (LI)
(72) Erfinder: Ohlendorf, Oliver, 86899 Landsberg (DE)
(74) Vertreter: Hilti Aktiengesellschaft Corporate Intellectual Property

(57) **Zusammenfassung**

Die vorliegende Erfindung betrifft eine Hohlbohrervorrichtung (1) zur Erzeugung eines Bohrlochs, wobei die Hohlbohrervorrichtung (1) einen Saugkopf (2) zur Verbindung der Hohlbohrervorrichtung (1) mit einer Staubabsaugevorrichtung umfasst, wobei der Saugkopf (2) mindestens eine Öffnung (4) zum Einsaugen von Luft in den Saugkopf (2) aufweist und eine Regelvorrichtung (5) zur Regulierung einer Größe der mindestens einen Öffnung (4) umfasst. In einem zweiten Aspekt betrifft die Erfindung eine Adaptervorrichtung, die ein solcher Saugkopf (2) sein kann.

## Beschreibung

Die vorliegende Erfindung betrifft eine Hohlbohrervorrichtung zur Erzeugung eines Bohrlochs, wobei die Hohlbohrervorrichtung einen Saugkopf zur Verbindung der Hohlbohrervorrichtung mit einer Staubabsaugevorrichtung umfasst, wobei der Saugkopf mindestens eine Öffnung zum Einsaugen von Luft in den Saugkopf aufweist und eine Regelvorrichtung zur Regulierung einer Größe der mindestens einen Öffnung umfasst. In einem zweiten Aspekt betrifft die Erfindung eine Adaptervorrichtung, die ein solcher Saugkopf sein kann.

Es sind im Stand der Technik Bohrvorrichtungen bekannt, die zum Erzeugen von Bohrlöchern in teilweise sehr hartem Untergrund, wie beispielsweise Beton, geeignet sind. Diese Bohrvorrichtungen arbeiten mit Bohrwerkzeugen, die sich in das zu durchbohrende Material hineinarbeiten und dadurch das zumeist runde Bohrloch zu erzeugen. Die Bohrvorrichtungen können mit konventionellen, massiven Bohrwerkzeugen ausgestattet sein. Es können aber auch hohle Bohrwerkzeuge verwendet werden, die beispielsweise als *«hollow drilling bits»* bezeichnet werden. Bei der Verwendung der sogenannten *«hollow drilling bits»* kann das bei der Bohrlocherzeugung anfallende zerkleinerte Material durch Öffnungen innerhalb des hohlen Bohrwerkzeugs aus dem Bohrloch abgeführt werden, indem es mit einem Unterdruck aus dem Bohrloch herausgesaugt wird. Das Bohrwerkzeug bzw. die damit verbundene Bohrvorrichtung kann dazu mit einer Staubabsaugevorrichtung verbunden sein, die in bekannter Weise einen Unterdruck erzeugt. Der Unterdruck wird dabei so eingestellt, dass ein ausreichend großer Absaugvolumenstrom erzeugt wird, um den Staub und das zerkleinerte Material aus dem Bohrloch abzusaugen.

Die Verbindung zwischen Hohlbohrervorrichtung und Staubabsaugevorrichtung kann von einem Saugkopf bzw. einer Adaptervorrichtung gebildet werden, wobei im Stand der Technik Saugköpfe bzw. Adaptervorrichtungen bekannt sind, die zwischen einem Saugerschlauchanschluss und Adapter einen Luft-Bypass-Kanal aufweisen, um Luft in den Saugkopf der Hohlbohrervorrichtung einzusaugen. Die in den Luft-Bypass-Kanal eingesogene Luft reduziert den von der Staubabsaugevorrichtung erzeugten Unterdruck im Saugkopf und führt so zu einer Drosselung der Saugleistung der Staubabsaugevorrichtung, wobei eine solche Drosselung für einige Anwendungen oder aufgrund von gesetzlichen oder sonstigen Vorgaben erwünscht sein kann. Allerdings sind die bisher im Stand der Technik vorgesehen Drosselmaßnahmen üblicherweise nur für eine spezielle Staubabsaugevorrichtung ausgelegt oder darauf abgestimmt; eine Möglichkeit zur Anpassung an verschiedene Staubabsaugevorrichtungen ist nicht vorgesehen. Dies kann insbesondere bei der Verwendung von leistungsschwächeren Saugern in Verbindung mit einer Hohlbohrervorrichtung dazu führen, dass der Luftstrom durch den Bypass-Kanal so groß ist, dass die Reinigungsleistung so stark gedrosselt wird, dass unter Umständen eine wirksame Reinigung eines Bohrlochs nicht mehr gewährleistet werden kann.

Aufgabe der vorliegenden Erfindung ist es somit, die vorstehend beschriebenen Nachteile konventioneller Hohlbohrervorrichtungen zu überwinden und eine Hohlbohrervorrichtung bereitzustellen, bei der die Drosselung der Saugleistung eines an der Hohlbohrervorrichtung angeschlossenen Staubabsaugevorrichtung an deren Saugleistung angepasst werden kann. Insbesondere soll die Hohlbohrervorrichtung flexibel mit verschiedenen Staubabsaugevorrichtungen unterschiedlicher Typen und Leistungsklassen zusammen verwendet werden können, wobei die Saugleistung der jeweils verwendeten Staubabsaugevorrichtung einfach und variabel an die äußeren Umstände oder gesetzliche Vorgaben angepasst werden können soll. Wünschenswert wäre es insbesondere wenn Hohlbohrervorrichtungen zunehmend auch mit leistungsschwächeren Staubabsaugevorrichtungen verwendet werden könnten, da deren Einsatz energetisch günstiger ist und diese leistungsschwächeren Staubabsaugevorrichtungen häufig einfacher in der Handhabung sind.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

Die Aufgabe wird gelöst durch eine Hohlbohrervorrichtung zur Erzeugung eines Bohrlochs, wobei die Hohlbohrervorrichtung einen Saugkopf zur Verbindung der Hohlbohrervorrichtung mit einer Staubabsaugevorrichtung umfasst. Die Hohlbohrervorrichtung ist dadurch gekennzeichnet, dass der Saugkopf mindestens eine Öffnung zum Einsaugen von Luft in den Saugkopf aufweist, wobei der Saugkopf eine Regelvorrichtung zur Regulierung einer Größe der mindestens einen Öffnung aufweist, so dass ein Durchfluss von Luft durch die mindestens eine Öffnung regulierbar ist. Überraschenderweise ermöglicht die vorliegende Erfindung, dass der Einsatzbereich von Hohlbohrervorrichtungen auf kleinere und leistungsschwächere Staubabsaugevorrichtungen erweitert werden kann. Darüber hinaus wird der Bediener einer vorgeschlagenen Hohlbohrervorrichtung dazu in die Lage versetzt, eine reduzierte Saugleistung der Staubabsaugevorrichtung durch eine Betätigung der Regelvorrichtung zu kompensieren. Wenn beispielsweise eine Verstopfung des Filters der Staubabsaugevorrichtung auftritt, ist eine solche Filterverstopfung üblicherweise mit einem Abfall der Saugleistung der Staubabsaugevorrichtung verbunden. Um diesen Leistungsabfall zu kompensieren, kann der Bediener eine Saugleistung weniger stark drosseln, indem beispielsweise mehr Fläche bzw. ein größerer Anteil einer Fläche von Öffnungen im Saugkopf der Hohlbohrervorrichtung von der Regelvorrichtung abgedeckt wird. Dadurch wird weniger Luft durch die Bypass-Öffnungen des Saugkopfes eingesogen und der Unterdruck im Saugkopf weniger stark gesenkt. Insbesondere wird auf diese Weise der Durchfluss von Luft durch die Bypass-Öffnung verringert, so dass die Saugleistung der angeschlossenen Staubsabsaugevorrichtung weniger stark reduziert wird und ein starker Reinigungs- bzw. Absaugstrom erhalten bleibt.

In einer besonders bevorzugten Ausgestaltung der Erfindung wird der Luftstrom, der durch den Saugkopf fließt, von zwei Teil-Luftströmen gebildet. Diese werden im Sinne der Erfindung bevorzugt als erster Luftstrom und als zweiter Luftstrom bezeichnet, wobei der erste Luftstrom vorzugsweise durch einen ersten Luftkanal fließt und der zweiten Luftstrom vorzugsweise durch einen zweiten Luftkanal fließt. Mit anderen Worten liegen in dem Saugkopf ein erster Luftkanal und ein zweiter Luftkanal vor, wobei der Saugkopf eine Regelvorrichtung zur Regulierung eines Durchflusses durch mindestens einen der beiden Luftkanäle umfasst, wobei durch die Regulierung des Durchflusses durch einen der beiden Luftkanäle der Durchfluss durch den anderen Luftkanal beinflussbar ist. Der Begriff "Luft" ist für den Fachmann kein unklarer Begriff, weil der Fachmann weiß, dass damit ein Gasgemisch bezeichnet wird, dass zu knapp 80 % aus Stickstoff (N₂), ca. 20 % aus Sauerstoff (O₂) und geringen Anteilen anderer Gase oder Gasgemische besteht.

Es ist im Sinne der Erfindung bevorzugt, dass der erste Luftkanal ein Bypass-Kanal darstellt, durch den vorzugsweise ein Luft-Bypass bzw. ein Bypass-Strom fließt. Der Bypass-Strom wird vorzugsweise gespeist von den Öffnungen zum Einsaugen der Luft, die beispielsweise im hinteren Bereich des Saugkopfes angeordnet vorliegen können. Der hintere Teil des Saugkopfes ist vorzugsweise derjenige Teil des Saugkopfs, der dem Bohrwerkzeug abgewandt ist, wobei sich das Bohrwerkzeug ausgehend von einem oberen Bereich des Saugkopfes vorzugsweise in eine vordere Raumrichtung erstreckt. Der Saugkopf kann eine, zwei, drei oder mehr Öffnungen aufweisen. Diese können beispielsweise schlitzförmig ausgebildet sein und so innerhalb des Saugkopf-Gehäuses angeordnet sein, dass sie von hinten betrachtet rechts und links entlang einer mittigen Achse verlaufen, wobei entlang dieser virtuellen Achse insbesondere eine längere Kante der vorzugsweise schlitzförmigen Öffnungen im Wesentlichen parallel verläuft und im Wesentlichen senkrecht dazu eine kürze Ober- und Unterkante der Öffnung. Mit anderen Worten kann es im Sinne der Erfindung bevorzugt sein, dass der Saugkopf zwei Öffnungen umfasst, die im Wesentlichen achsensymmetrisch um eine mittige Achse des Saugkopfes angeordnet sind. Ferner kann die mindestens eine Öffnung schlitzartig ausgebildet und entlang einer gedachten mittigen Achse des Saugkopfes angeordnet sein. Der Saugkopf kann vorzugsweise auch als Adaptervorrichtung bezeichnet werden. Er verbindet vorzugsweise den Schlauch, der von der Staubabsaugevorrichtung kommt, mit der Hohlbohrervorrichtung.

Der Bypass-Strom wird vorzugsweise dazu verwendet, eine Saugleistung der Staubabsaugevorrichtung zu reduzieren. Dies kann beispielsweise erforderlich sein, wenn das verwendete Bohrwerkzeug nur kleine Öffnungen zum Einsaugen des Staubes aufweist oder wenn die Staubabsaugevorrichtung an einer sensiblen Stelle eingesetzt werden soll. Die Reduzierung der Saugleistung kann auch mit gesetzlichen oder sonstigen Vorgaben zusammenhängen, die beispielsweise dazu führen, dass in den Geräten Vorrichtungen vorgesehen sind, die signalisieren, wenn eine maximale oder eine minimale Saugleistung über- oder unterschritten wird. Beispielsweise geben solche Signalvorrichtungen Töne oder Geräusche ab, wenn entsprechende Sollbereiche nach oben oder unten verlassen werden. Die Vorsehung der Öffnungen, die vorzugsweise auch als Bypass-Öffnungen bezeichnet werden, können, kann daher dazu beitragen, die genannten Vorgaben und Grenzwerte einzuhalten bzw. ein Einschalten der Signalvorrichtungen zu vermeiden.

Die gewünschte Reduzierung der Saugleistung hängt vorzugsweise von der Saugleistung der Staubabsaugevorrichtung ab, wobei die Leistung eines starken Saugers vorzugsweiseweise stärker reduziert bzw. gedrosselt werden soll als die Saugleistung einer schwächeren Staubabsaugevorrichtung. Eine starke Drosselung der Saugleistung wird vorzugsweise durch großflächige Bypass-Öffungen bewirkt, während die Saugleistung einer schwachen Staubabsaugevorrichtung lediglich die Vorsehung von kleinen Bypass-Öffnungen, durch die entsprechend weniger Luft eingesogen wird, erforderlich macht. Entsprechend ist die Regelvorrichtung vorzugsweise dazu eingerichtet, eine Größe der Bypass-Öffnungen im Saugkopf in Abhängigkeit von der Saugleistung der angeschlossenen Staubabsaugevorrichtung zu vergrößern oder zu verkleinern. Dies kann beispielsweise dadurch geschehen, dass die Regelvorrichtung als Schieber oder als Drehring ausgebildet ist, wobei die entsprechende Vorrichtung beispielsweise über die Bypass-Öffnungen geschoben werden kann. Beispielsweise kann es für eine große Staubabsaugevorrichtung mit starker Saugleistung bevorzugt sein, dass die Bypass-Öffnungen nur wenig oder gar nicht bedeckt bzw. verschlossen werden und die Bypass-Öffnungen möglichst groß sind, so dass eine größere Menge Luft eingesogen werden kann. Dahingegegen kann es für kleinere und leistungsschwächere Staubabsaugevorrichtungen bevorzugt sein, dass die Bypass-Öffnungen möglichst klein sind, so dass nur geringe Mengen Luft eingesogen werden. Dies kann vorzugsweise dadurch erreicht werden, dass die Bypass-Öffnungen zu einem großen Teil, d.h. relativ großflächig, bedeckt bzw. verschlossen sind. Es kann im Sinne der Erfindung auch bevorzugt sein, dass die Bypass-Öffnungen gänzlich verschlossen sind.

Durch den zweiten Kanal im Saugkopf fließt vorzugsweise der Reinigungsstrom. Dieser Reinigungsstrom wird vorzugsweise dadurch erzeugt, dass in der Staubabsaugevorrichtung ein Unterdruck erzeugt wird, der dann mit geeigneten Leitungsmitteln in den Bereich des vorderen Hohlbohrers geleitet wird. Dort befinden sich Öffnungen, durch die - bedingt durch den Unterdruckt - Staub und Luft eingesogen wird. Der Reinigungsstrom kann daher vorzugsweise auch als Absaugstrom oder Absaugvolumenstrom bezeichnet werden. Der Begriff "Unterdruck" bezeichnet insbesondere einen solchen Druck, der kleiner ist als der übliche Atmosphärendruck bzw. der Druck der Umgebung, in der die Hohlbohrervorrichtung betrieben wird.

Der Begriff "Absaugvolumenstrom" bezeichnet im Sinne der Erfindung vorzugsweise denjenigen Luftstrom, mit dem unter Verwendung von Unterdruck Staub aus einem Bohrloch abgesaugt werden kann, wenn beim Bohren ein hohles Bohrwerkzeug verwendet wird. Ein solches hohles Bohrwerkzeug kann vorzugsweise in seinem vorderen Bereich, wo der Kontakt mit dem zu durchbohrenden Material erfolgt, mit Öffnungen ausgestattet sein, wobei diese Öffnungen durch eine Staubsaugevorrichtung mit einem Unterdruck beaufschlagt werden können. Durch den Unterdruck wird der beim Bohren entstehende Staub durch die Öffnungen in das hohle Bohrwerkzeug hineingesaugt und durch das Werkzeug, den Saugkopf und das Absaugrohr hindurch in das Innere der Staubabsaugevorrichtung befördert, wo es in einem Sammelbehälter aufbewahrt wird.

Der erste und der zweite Kanal stellen keine räumlich und/oder strukturell voneinander getrennte Kanäle dar, sondern die beiden Kanäle sind vorzugsweise in dem Sinne miteinander verbunden, dass das Vorliegen eines Bypass-Luftstroms in dem ersten Kanal einen Einfluss auf die Stärke des zweiten Luftstroms, d.h. des Reinigungsstroms, hat bzw. diese beeinflusst. Insbesondere ist es im Sinne der Erfindung bevorzugt, wenn die Regulierung des Durchflusses durch die mindestens eine Bypass-Öffnung den Durchfluss durch den zweiten Luftkanal beeinflusst, d.h. die Stärke des Absaugevolumenstroms verändert. Vorzugsweise bilden die beiden Luftkanäle ein kommunizierendes Kanalsystem, bei dem die einzelnen Kanäle leitend miteinander in Verbindung stehen. Der Begriff «Durchfluss» wird vorzugsweise synonym zu dem Begriff «Durchflussmenge» oder «Durchflussvolumen» verwendet. Die Begriffe bezeichnen vorzugsweise die Menge oder das Volumen eines Fluids, das durch einen Kanal hindurchströmen kann. Vorzugsweise handelt es sich bei dem Fluid im Sinne der Erfindung um Luft bzw. um einen Strom aus Luft, der vorzugsweise dadurch in Bewegung gebracht wird, dass er von der Staubsabsaugevorrichtung angesaugt wird. Insbesondere erzeugt die Staubsabsaugevorrichtung dazu in ihrem Inneren einen Unterdruck. Dieser Unterdruck wird mit entsprechenden Leitungsmitteln an den Saugkopf bzw. die Adaptervorrichtung übertragen, wobei der übertragene Sog vorzugsweise den Reinigungs- bzw. Absaugestrom im Saugkopf bewirkt.

Der Luft-Bypass, der vorzugsweise durch den Bypass-Kanal, also vorzugsweise den ersten Luftkanal, fließt, ist vorzugsweise dazu eingerichtet, eine Drosselung eines Luftstroms der Staubabsaugevorrichtung zu bewirken. Damit kann die Reinigungsleistung der Staubabsaugevorrichtung vorzugsweise auf ein gewünschtes oder zuvor festgelegtes Niveau eingestellt werden. Vorzugsweise wird der erste Luftkanal durch das Vorhandensein der mindestens einen Bypass-Öffnung im Saugkopf hervorgerufen. Durch die Vorsehung der mindestens einen Bypass-Öffnung im Saugkopf und der Möglichkeit, die Größe der mindestens einen Öffnung zu variieren, ist es vorteilhafterweise möglich, eine Absaugeleistung einer mit einer Hohlbohrervorrichtung verbundenen Staubabsaugevorrichtung einzustellen. Es ist im Sinne der Erfindung ganz besonders bevorzugt, dass der Saugkopf eine Regelvorrichtung zur Regulierung der Größe der Bypass-Öffnungen umfasst, wobei durch die Regulierung des Durchflusses durch die Bypass-Öffnungen vorzugsweise auch die Stärke des Reinigungs- bzw. Absaugestroms beeinflusst wird. Es kann im Sinne der Erfindung auch bevorzugt sein, dass die Regelvorrichtung dazu eingerichtet ist, die Größe der Bypass-Öffnungen selbsttätig zu regeln, beispielsweise auf einen Wunschdruck. Dazu kann die Regelvorrichtung zum Beispiel ein Proportionaldruck-Regelventil umfassen oder als solches ausgebildet sein.

Durch die Vorsehung dieser Regulierungsmöglichkeit des Durchflussvolumens durch die Bypass-Öffnungen ermöglicht die Erfindung vorteilhafterweise, dass die Größe des Bypass-Kanals an die Saugleistung der Staubsabsaugevorrichtung angepasst werden kann. Dadurch kann ein wichtiger Beitrag zur Einhaltung von gesetzlichen und anderen Vorgaben oder Grenzwerten geleistet werden. Es ist im Sinne der Erfindung besonders bevorzugt, dass der Durchfluss durch den zweiten Luftkanal insbesondere ausschlaggebend für das Reinigungs- bzw. Absaugestromvolumen bzw. die Stärke des Reinigungs- bzw. Absaugestroms ist. Ein besonderer Vorteil der Erfindung besteht darin, dass die Stärke des Reinigungs- bzw. Absaugestroms konstant oder auf einem gewünschten Leistungsniveau gehalten werden kann, wenn unterschiedliche Staubabsaugevorrichtungen mit der Hohlbohrervorrichtung verbunden werden. Dies wird vorzugsweise dadurch erreicht, dass der Durchfluss durch den Bypass-Kanal variiert wird, d.h. dass der Durchfluss durch den Bypass-Kanal an die Saugleistung der aktuell an die Hohlbohrervorrichtung angeschlossene Staubabsaugevorrichtung angepasst wird. Es ist im Sinne der Erfindung ganz besonders bevorzugt, dass der Durchfluss durch den Bypass-Kanal in Abhängigkeit von der Saugleistung des ausgewählten und mit dem Hohlbohrer verbundenen Entstaubers ausgewählt und mit Hilfe der Regelvorrichtung des Saugkopfes eingestellt wird. Dies erfolgt insbesondere dadurch, dass mit der Regelvorrichtung die Größe der Bypass-Öffnungen in Abhängigkeit von der Saugleistung der aktuellen Staubsabsaugevorrichtung vergrößert oder verkleinert werden kann.

Es ist im Sinne der Erfindung bevorzugt, dass die Regelvorrichtung dazu eingerichtet ist, einen Luft-Durchfluss durch die Bypass-Öffnungen des Saugkopfes zu verändern, d.h. den Durchfluss in Abhängigkeit von äußeren Vorgaben zu verringern oder zu vergrößern. Bei den äußeren Vorgaben kann es sich beispielsweise um eine Eingabe oder Einstellung handeln, die ein Bediener der Hohlbohrervorrichtung an dem Saugkopf bzw. an dem Adapter vornimmt. Zur Vornahme von Eingaben oder zum Einstellen von Werten der gewünschten Durchflussmenge kann die Regelvorrichtung in einer bevorzugten Ausgestaltung der Erfindung einen Schieber oder einen Drehring als Einstellvorrichtung umfassen. Mit anderen Worten ist es im Sinne der Erfindung bevorzugt, dass die Regelvorrichtung als Schieber oder Drehring ausgebildet ist.

Es ist im Sinne der Erfindung bevorzugt, dass der Durchfluss durch die Bypass-Öffnungen vorzugsweise in Stufen eingestellt werden kann. Die einzelnen Einstellstufen können beispielsweise mit unterschiedlichen Typen oder Kategorien von Staubabsaugevorrichtungen assoziiert sein. Beispielsweise können für die einzelnen Typen oder Kategorien von Staubabsaugevorrichtungen Einstellmarken an dem Saugkopf oder an der Adaptervorrichtung vorgesehen sein, wobei die Vorsehung der Einstellmarken die Einstellung einer für den entsprechenden Entstaubertyp optimalen Saugleistung erheblich erleichtert. Mit anderen Worten ist es im Sinne der Erfindung bevorzugt, dass der Saugkopf Einstellmarken zum Einstellen unterschiedlicher Größen der Bypass-Öffnungen bzw. zur Einstellung von unterschiedlichen Durchflussmengen durch die mindestens eine Bypass-Öffnung aufweist. Vorzugsweise können die einzelnen Typen oder Kategorien von Staubabsaugevorrichtungen beispielsweise an dem Saugkopf oder an der Adaptervorrichtung angegeben sein, so dass die Regel- bzw. Einstellvorrichtung so positioniert bzw. eingestellt werden kann, dass die Größe der Bypass-Öffnungen so eingestellt werden kann, dass eine ausreichend große oder eine zuvor festgelegte Mindest-Saugleistung der Staubabsaugevorrichtung erreicht wird. Für einige Anwendungen kann es auch bevorzugt sein, dass die Einstellung der Luft-Durchflussmenge durch die Bypass-Öffnungen stufenlos erfolgt.

In einem zweiten Aspekt betrifft die Erfindung eine Adaptervorrichtung für eine Hohlbohrervorrichtung, wobei die Adaptervorrichtung mindestens eine Öffnung zum Einsaugen von Luft in die Adaptervorrichtung aufweist, wobei die Adaptervorrichtung eine Regelvorrichtung zur Regulierung einer Größe der mindestens einen Öffnung aufweist, so dass ein Durchfluss von Luft durch die mindestens eine Öffnung regulierbar ist. In einer bevorzugten Ausgestaltung liegen in der Adaptervorrichtung ein erster Luftkanal und ein zweiter Luftkanal vor, wobei die Adaptervorrichtung eine Regelvorrichtung zur Regulierung eines Durchflusses durch mindestens einen der beiden Luftkanäle umfasst, wobei durch die Regulierung des Durchflusses durch einen der beiden Luftkanäle der Durchfluss durch den anderen Luftkanal beinflussbar ist. Es ist im Sinne der Erfindung ganz besonders bevorzugt, dass die Adaptervorrichtung ein Saugkopf zur Verbindung der Hohlbohrervorrichtung mit einer Staubabsaugevorrichtung ist. Die für die Hohlbohrervorrichtung eingeführten Begriffe, Definitionen und technischen Vorteile gelten vorzugsweise für die vorgeschlagene Adaptervorrichtung analog.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:

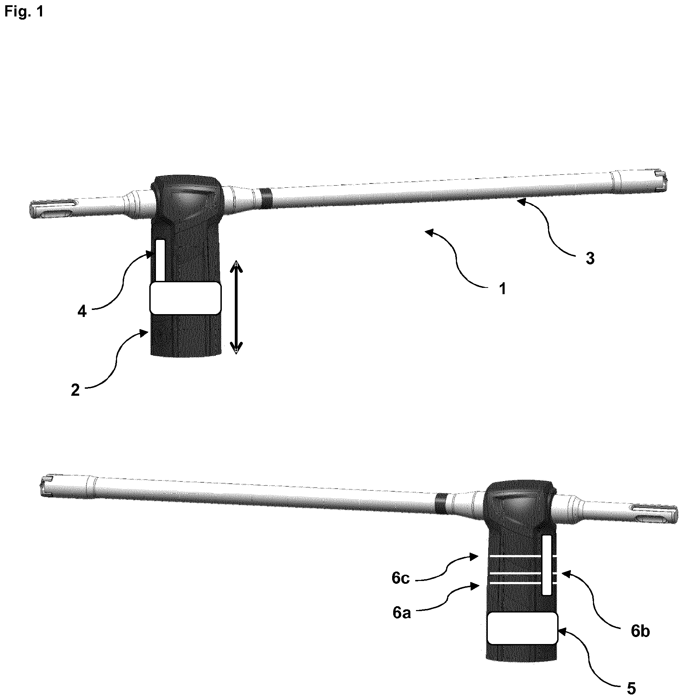

- Fig. 1: Ansicht einer bevorzugten Ausgestaltung der Erfindung

### Ausführungsbeispiele:

Figur 1 zeigt eine bevorzugte Ausgestaltung einer vorgeschlagenen Hohlbohrervorrichtung (1). Dargestellt ist ein Bohrwerkzeug (3), bei dem es sich insbesondere um ein *«hollow drill bit»* handeln kann. Das Bohrwerkzeug (3) ist mit einem Saugkopf (2) verbunden, der wiederum unter Verwendung geeigneter Verbindungs- und Leitungsmittel (nicht dargestellt) mit einer Staubabsaugevorrichtung (nicht dargestellt) verbindbar ist. Diese Verbindungs- und Leitungsmittel können insbesondere flexible Schläuche sein, wobei ein solcher Schlauch beispielsweise sowohl an dem Saugkopf (2), als auch an der Staubabsaugevorrichtung angeschlossen sein kann. Vorzugsweise umfasst der Saugkopf an seiner Unterseite einen Saugerschlauchanschluss, in den die Leitungs- und Verbindungsmittel, die von der Staubabsaugevorrichtung kommen, einmünden. Durch das hohle Bohrwerkzeug (3) können Staub und Verunreinunigungen mit der Staubabsaugevorrichtung aus dem Bohrloch herausgesaugt werden. Dies erfolgt insbesondere durch einen Unterdruck, der in der Staubsabsaugevorrichtung erzeugt wird. Vorzugsweise kann der Saugkopf (2) der Hohlbohrervorrichtung (1) unter Verwendung der Verbindungs- und Leitungsmittel mit diesem Unterdruck beaufschlagt werden, so dass in dem Bohrwerkzeug (3) und dem Saugkopf (2) der in der Staubabsaugevorrichtung erzeugte Unterdruck vorliegt.

Der Saugkopf (2) weist mindestens eine Öffnung (4) zum Einsaugen von Luft in den Saugkopf (2) auf, wobei der Saugkopf (2) eine Regelvorrichtung (5) zur Regulierung einer Größe der mindestens einen Öffnung (4) aufweist. Dadurch ermöglicht es die Erfindung vorteilhafterweise, dass ein Durchfluss durch die mindestens eine Öffnung (4) regulierbar ist bzw. die Größe der mindestens einen Öffnung (4) eingestellt werden kann.

Figur 1 zeigt Ansichten der unterschiedlichen Seiten einer bevorzugten Ausgestaltung der vorgeschlagenen Hohlbohrervorrichtung (1). In dem in Figur 1 dargestellten Ausführungsbeispiel der Erfindung weist der Saugkopf (2) zwei Öffnungen (4) auf, wobei diese Öffnungen (4) vorzugsweise auch als Bypass-Öffnungen bezeichnet werden. Die beiden Bypass-Öffnungen (4) sind rechts und links von einer gedachten mittigen Achse (nicht dargestellt) des Saugkopfes (2), die in einer Hinterwand des Saugkopfes (2) liegt, angeordnet und im dargestellten Beispiel in dem Sinne schlitzartig ausgeführt, dass sie eine längliche, ovale Form aufweisen, wobei sich die längeren Seitenkanten der Öffnungen (4) im Wesentlichen parallel zu der gedanklichen, mittigen Achse erstrecken und die kürzeren Ober- und Unterkanten der Öffnungen (4) im Wesentlichen orthogonal zu der gedanklichen mittigen Achse ausgerichtet sind.

Die Öffnungen (4) weisen jeweils eine Größe auf, die durch die Seiten-, Ober- und Unterkanten der Öffnungen (4) festgelegt wird. Es ist im Sinne der Erfindung bevorzugt, dass in einem unregulierten Zustand der Hohlbohrervorrichtung (1) bzw. des Saugkopfes (2) Luft durch die gesamte Fläche der Öffnungen (4) in den Saugkopf (2) eingesogen wird. Bewirkt wird dieser Sog vorzugsweise durch den Unterdruck, der in der Staubabsaugevorrichtung erzeugt wird und mit dem der Saugkopf (2) beaufschlagt werden kann.

Der Saugkopf (2) weist eine Regelvorrichtung (5) zur Regulierung der Größe bzw. der Fläche der Öffnungen (4) auf. Die Regelvorrichtung (5) kann beispielsweise als Schieber oder Drehring ausgebildet sein, wobei die Regelvorrichtung (5) insbesondere dazu eingerichtet ist, die Fläche der Öffnungen (5) ganz oder teilweise zu bedecken, so dass an den bedeckten Stellen der Öffnungen (4) keine Luft mehr in den Saugkopf (2) eingesogen werden kann. Dazu kann die Regelvorrichtung (5) in Bezug auf den Saugkopf (2) nach oben und unten bewegt werden. Der Schieber kann beispielsweise im Bereich der Öffnungen (4) des Saugkopfes (2) vorliegen und mit einer Hin- und Herbewegung nach oben oder unten verschoben werden. Dazu kann beispielweise ein Daumen eines Benutzers der vorgeschlagenen Hohlbohrervorrichtung (1) auf den Schieberegler gelegt werden, wobei der Schieber mit dem Daumen verschoben werden kann. Wenn die Regelvorrichtung (5) als Drehring ausgebildet ist, kann der Ring vorteilhafterweise vollständig um den Saugkopf (2) herumgelegt sein, wodurch eine besonders gute Abdichtung der Öffnungen (4) und somit eine effiziente Regulierung des Durchflusses von Luft durch die Öffnungen (4) erreicht wird. Dadurch kann eine wirksame Reduzierung der Drosselung der Saugleistung der angeschlossenen Staubabsaugevorrichtung erreicht werden.

Die Bewegungsmöglichkeit der Regelvorrichtung (5) ist in Figur 1 durch den zweispitzigen Pfeil angedeutet. Die Bewegungsrichtung "nach oben" ist im Sinne der Erfindung eine Bewegung in Richtung des Bohrwerkzeugs (3), während eine Bewegungsrichtung "nach unten" einer Bewegung in Richtung einer Unterseite des Saugkopfes (2) entspricht bzw. einer Bewegung in Richtung einer Anschlussstelle für die Verbindungs- und Leitungsmittel zur Staubabsaugevorrichtung.

Der untere Bereich der Figur 1 zeigt einen Saugkopf (2), bei dem die gezeigte Öffnung (4) nicht von der Regelvorrichtung (5) bedeckt ist. Dieser Zustand wird im Sinne der Erfindung als unregulierter Zustand bezeichnet. In diesem Fall ist der erste Luftstrom, d.h. der Bypass-Luftstrom, maximal und es kann eine wirksame Drosselung der Saugleistung der angeschlossenen Staubabsaugevorrichtung erreicht werden. Der unregulierte oder im Wesentlichen unregulierte Zustand wird insbesondere für solche Staubabsaugevorrichtungen mit einer großen Saugleistung verwendet, für die es unter manchen Umständen gewünscht sein kann, dass die Saugleistung drosselbar bzw. regulierbar oder einstellbar ist. Der unregulierte Zustand ist insbesondere dadurch charakterisiert, dass die Regelvorrichtung (5) nicht im Bereich der Öffnung (4) des Saugkopfes (2) vorliegt, sondern beispielsweise darunter - wie im in Figur 1, unten, dargestellten Beispiel - oder darüber angeordnet sein kann.

Der obere Bereich der Figur 1 zeigt einen regulierten Zustand des Saugkopfes (2). Um von dem unregulierten Zustand in den regulierten Zustand zu gelangen, wird die Regelvorrichtung (5) bewegt, im in Figur 1 dargestellten Fall von einer ersten Position der Regelvorrichtung (5) unterhalb der Öffnung (4) in eine zweite Position der Regelvorrichtung (5), bei der zumindest ein Teil der Fläche der dargestellten Öffnung (4) des Saugkopfes (2) von der Regelvorrichtung (5) bedeckt ist. Diese Bewegung von der ersten Position zu der zweiten Position der Regelvorrichtung (5) stellt im Sinne der Erfindung eine Bewegung «nach oben» dar, während eine Bewegung der Regelvorrichtung (5) von der zweiten Position (regulierter Zustand) in die erste Position (unregulierter Zustand) einer Bewegung "nach unten" entspricht.

Im regulierten Zustand liegt zumindest ein Teilbereich der Fläche der Öffnungen (4) von der Regelvorrichtung (5) bedeckt vor. Dieser zugedeckte Teilbereich der Öffnungen (4) steht dadurch nicht mehr für das Einsaugen von Luft zur Erzeugung eines Bypass-Luftstroms zur Verfügung. Der Bypass-Luftstrom kann vorzugsweise dazu verwendet werden, eine Saugleistung der angeschlossenen Staubabsaugevorrichtung herunterzuregeln, indem der im Saugkopf (2) herrschende Unterdruck durch die Zuführung von zusätzlicher Luft reduziert wird. Dadurch sinkt vorteilhafterweise auch die Saugwirkung im vorderen Bereich des Bohrwerkzeugs (3) der Hohlbohrervorrichtung (1), der bei Betrieb der Hohlbohrervorrichtung (1) vorzugsweise im Bohrloch vorliegt. Diese Funktionalität, d.h. die Möglichkeit, den Unterdruck im Saugkopf (2) an die Saugleistung einer Staubabsaugevorrichtung anzupassen, kann auch dadurch beschrieben werden, dass die Regelvorrichtung (5) dazu eingerichtet ist, eine Größe der mindestens einen Öffnung (4) im Saugkopf (2) in Abhängigkeit von der Saugleistung der angeschlossenen Staubabsaugevorrichtung zu verändern, wodurch vorzugsweise die Menge der durch die Öffnungen (4) in den Saugkopf (2) eingesogenen Luft eingestellt werden kann. Indem im regulierten Zustand diese Saugleistungsreduzierung bzw. die Drosselung der Saugleistung durch eine Verkleinerung der Fläche der Öffnungen (4) eingeschränkt wird, ist der regulierte Zustand insbesondere in Verbindung mit kleineren, leistungsschwächeren Staubabsaugevorrichtungen vorgesehen, deren Saugleistungen weniger stark gedrosselt werden müssen.

Vorzugsweise sind am vorgeschlagenen Saugkopf (2) Einstellmarken (6) zum Einstellen unterschiedlicher Größen der Öffnungen (4) vorgesehen. Dabei kann es sich um Markierungen, Linien, Striche, Vertiefungen oder andere Darstellungsformen von Markierungen handeln. Die einzelnen Einstellstufen bzw. Einstellmarken (6) können beispielsweise mit unterschiedlichen Typen oder Kategorien von Staubabsaugevorrichtungen assoziiert sein. Beispielsweise können für unterschiedliche Typen, Leistungsklassen oder Kategorien von Staubabsaugevorrichtungen Einstellmarken (6) an dem Saugkopf (2) oder an der Adaptervorrichtung (2') vorgesehen sein, wobei die Vorsehung der Einstellmarken (6) die Einstellung einer für den entsprechenden Entstaubertyp optimalen Saugleistung ermöglicht. Die Einstellmarken (6) können beispielsweise äquidistant zueinander angeordnet sein oder unterschiedliche Abstände zueinander aufweisen. Beispielsweise können die Abstände der Einstellmarken (6) mit Unterschieden zwischen den Saugleistungen unterschiedlicher Staubabsaugevorrichtungen korrespondieren. Die Regelvorrichtung (5) kann beispielsweise mit ihrer Oberkante oder der Unterseite an eine der Einstellmarken (6) herangeschoben werden, wobei vorzugsweise ein Anteil an der Fläche der Öffnungen (4) abgedeckt wird. Vorzugsweise handelt es sich dabei um einen Flächenanteil, der erforderlich ist, um die entsprechende Drosselung der Saugleistung der mit der entsprechenden Einstellmarke (6) assoziierten Staubabsaugevorrichtung zu erreichen.

Beispielsweise kann eine unterste Einstellmarke (6a), zum Beispiel die unterste Linie der drei in Figur 1, untere Abbildung, dargestellten Einstellmarken (6), für eine Staubabsaugevorrichtung eines Typs A oder einer Leistungsklasse A vorgesehen sein. Bei der Staubabsaugevorrichtung des Typs A oder der Leistungsklasse A kann es sich beispielsweise um eine große und/oder leistungsstarke Staubabsaugevorrichtung handeln. Die mittlere Einstellmarke (6b) kann beispielsweise für eine mittelstarke Staubabsaugevorrichtung eines Typs B oder einer Leistungsklasse B vorgesehen sein, wobei die oberste Einstellmarke (6c) zum Beispiel für eine kleine, leistungsschwächere Staubabsaugevorrichtung des Typs C oder der Leistungsklasse C vorgesehen sein kann. Die erreichte Drosselung der Saugleistung ist vorzugsweise bei Einstellung der untersten Einstellmarke (6a) am größten, während sie bei der Einstellung der Regelvorrichtung (5) auf die oberste Einstellmarke (6c) am kleinsten ist.

### Bezugszeichenliste

- 1: Hohlbohrervorrichtung
- 2: Saugkopf
(2': Adaptervorrichtung)
- 3: Bohrwerkzeug
- 4: Öffnung
- 5: Regelvorrichtung
- 6: Einstellmarken
(6a,b, c: Einstellmarken für verschiedene Staubabsaugvorrichtungen)

## Patentansprüche

1. Hohlbohrervorrichtung (1) zur Erzeugung eines Bohrlochs, wobei die Hohlbohrervorrichtung (1) einen Saugkopf (2) zur Verbindung der Hohlbohrervorrichtung (1) mit einer Staubabsaugevorrichtung umfasst,
**dadurch gekennzeichnet, dass**
der Saugkopf (2) mindestens eine Öffnung (4) zum Einsaugen von Luft in den Saugkopf (2) aufweist, wobei der Saugkopf (2) eine Regelvorrichtung (5) zur Regulierung einer Größe der mindestens einen Öffnung (4) aufweist, so dass ein Durchfluss durch die mindestens eine Öffnung (4) regulierbar ist.

2. Hohlbohrervorrichtung (1) nach Anspruch 1
**dadurch gekennzeichnet, dass**
die Regelvorrichtung (5) dazu eingerichtet ist, eine Größe der mindestens einen Öffnung (4) im Saugkopf (2) in Abhängigkeit von der Saugleistung der angeschlossenen Staubabsaugevorrichtung zu verändern.

3. Hohlbohrervorrichtung nach Anspruch 1 oder 2
**dadurch gekennzeichnet, dass**
die Regelvorrichtung (5) einen Schieber oder einen Drehring umfasst.

4. Hohlbohrervorrichtung (1) nach einem oder mehreren vorhergehenden Ansprüche
**dadurch gekennzeichnet, dass**
der Saugkopf (2) Einstellmarken (6) zum Einstellen unterschiedlicher Größen der mindestens einen Öffnung (4) im Saugkopf (2) umfasst.

5. Hohlbohrervorrichtung (1) nach einem oder mehreren vorhergehenden Ansprüche
**dadurch gekennzeichnet, dass**
die mindestens eine Öffnung (4) schlitzartig ausgebildet ist und entlang einer gedachten mittigen Achse des Saugkopfes (2) angeordnet ist.

6. Hohlbohrervorrichtung (1) nach einem oder mehreren vorhergehenden Ansprüche
**dadurch gekennzeichnet, dass**
der Saugkopf (2) zwei Öffnungen (4) umfasst, die im Wesentlichen achsensymmetrisch um eine mittige Achse des Saugkopfes (2) angeordnet sind.

7. Adaptervorrichtung (2') für eine Hohlbohrervorrichtung (1)
**dadurch gekennzeichnet, dass**
die Adaptervorrichtung (2') mindestens eine Öffnung (4) zum Einsaugen von Luft in die Adaptervorrichtung (2') aufweist, wobei die Adaptervorrichtung (2') eine Regelvorrichtung (5) zur Regulierung einer Größe der mindestens einen Öffnung (4) aufweist, so dass ein Durchfluss von Luft durch die mindestens eine Öffnung (4) regulierbar ist.

8. Adaptervorrichtung (2') nach Anspruch 7
**dadurch gekennzeichnet, dass**
die Adaptervorrichtung (2') ein Saugkopf (2) zur Verbindung der Hohlbohrervorrichtung (1) mit einer Staubabsaugevorrichtung ist.
